# EUROPEAN PATENT SPECIFICATION

(11) **EP 3 850 593 B1**
(45) Date of publication and mention of the grant of the patent: **05.10.2022**
(21) Application number: 19765245.6
(22) Date of filing: 06.09.2019
(51) Int. Cl.: G05B 13/04, G05B 17/02

(54) **METHOD FOR IMPROVING PREDICTION RELATING TO THE PRODUCTION OF A POLYMERIC PRODUCT**
VERFAHREN ZUR VERBESSERUNG DER VORHERSAGE BEZÜGLICH DER HERSTELLUNG EINES POLYMER-IC-PRODUKTS
PROCÉDÉ POUR AMÉLIORER LA PRÉDICTION RELATIVE À LA PRODUCTION D'UN PRODUIT POLYMÈRE

(30) Priority: 14.09.2018 EP 18194409
(43) Date of publication of application: 21.07.2021
(73) Proprietor: Covestro Intellectual Property GmbH & Co. KG, 51373 Leverkusen (DE)
(72) Inventor: TABBI, Giuseppe, Teodoro, Maria, 40593 Düsseldorf (DE); WINDECK, Christian, 41751 Viersen (DE); CLAUBERG, Karin, 42699 Solingen (DE); LOOF, Michael, 51371 Leverkusen (DE); SCHOLZ, Roger, 52538 Selfkant-Süsterseel (DE)
(74) Representative: Levpat
(86) International application number: PCT/EP2019/073815
(87) International publication number: WO 2020/053087

(56) References cited:
- WO-A1-2005/019948
- US-A1- 2007 260 357

## Description

The invention is directed at a method for improving prediction relating to the production of a polymeric product.

There is a wide range of different applications for polymeric products. Consequently, there are also wide-ranging and strongly varying different product property specifications that are prescribed for those polymeric products. These different specifications determine desired values or value ranges for weight, rigidity, emissions, temperature durability and many other features of the respective polymeric product. Further, the polymeric product properties do not only depend on the formulation, which specifies the material ingredients of the polymeric product, used for the production of the polymeric product, but also on different process parameters applied in the production process of the polymeric product, including properties of production tools used. The polymeric product properties may also depend on production parameters ambient variables during the production process of the polymeric product.

The usual process involves proceeding from a known formulation and known process parameters resulting in a product with known properties and then making adjustments based on prior experience and general considerations. Based on these adjustments, a number of sample products are produced and their relevant properties experimentally determined. From such observations, there may also be dependencies derived and expressed in terms of formulas. This then permits a prediction of product properties based on the formulation data or vice versa. However, the expression of such formulas presupposes that the person analyzing the dependencies thinks of the correct formula or types of formula - i.e. a hypothesis - to apply and test, i.e. to verify the hypothesis. It may happen that there are functional relationships which remain substantially elusive to such an approach because the proper hypothesis is not thought of.

WO 2005/019948 A1, from which the present invention proceeds, discloses molding and process control techniques for manufacturing products. Computer-aided modeling techniques are described that allow the manufacturer to predict a profile for a multivariate output that is necessary to achieve a target performance property for a manufactured product. Desired performance properties for a product are selected and based on the selected performance properties, product control center invokes the reverse chemometric model to predict the required multivariate output. Product control center determines the necessary operating parameters to achieve the predicted multivariate output and the product is produced according to the operating parameters.

Consequently, the object of the invention is to provide a method for improving prediction relating to the production of a polymeric product which is able to identify dependencies which are difficult or costly to find based on a purely analytical approach.

The object of the invention is achieved by a method for improving prediction relating to the production of a polymeric product with the features of claim 1.

The invention is based on the realization that reinforcement learning may be used to develop and improve a prediction model which, at least for some cases, may be more accurate and explorative than a prediction model generated either by purely analytic considerations or by other forms of machine learning such as supervised learning. In particular for complex, subtle and potentially counterintuitive correlations between product properties on the one hand and production parameters and formulation data on the other hand, such an evolutionary approach may be the most efficient way to achieve the desired prediction model. The resulting improvement in the prediction may then be used both for determining product properties based on production parameters and formulation data and for determining production parameters and formulation data based on desired product properties.

The method according to the invention is for improving prediction relating to the production of a polymeric product.

The polymeric product may be a polyurethane product or a polyisocyanurate product. Thus, the polymeric product properties may be polyurethane or polyisocyanurate product properties, the polymeric production may be polyurethane or polyisocyanurate production and the polymeric formulation may be polyurethane or polyisocyanurate formulation. Alternatively or in addition, the polymeric product may be a foam product. Thus alternatively or in addition, the polymeric product properties may be foam product properties, the polymeric production may be foam production and the polymeric formulation may be foam formulation.

Preferably, the polymeric product is a polycarbonate product. Accordingly, the polymeric product properties may be polycarbonate product properties, the polymeric production may be polycarbonate production and the polymeric formulation may be polycarbonate formulation.

In the method according to the invention, a prediction model is provided for describing a functional relationship between production parameters, which production parameters comprise formulation portions data specifying raw material portions used for the production of a respective polymeric product and comprise processing parameters data specifying machine process properties during the production of that polymeric product, and product properties data associated with that polymeric product on a computer system. In other words, the prediction model is either a computer program or a parameter set for a computer program, which computer program is executed on a computer device and which provides a way to determine at least some production parameters based and/or some product properties data based on given other production parameters and/or other product properties data. Thus for example, the prediction model may take at least the product properties data as input and provide at least the production parameters as output. It may also be the other way around. Any electronic device with a microprocessor presents a computer device in the present sense. The prediction model constitutes a part of what is understood as policy in the context of reinforcement learning.

In the method according to the invention, the production parameters and product properties data form data entry properties for a respective polymeric product. The data entry properties may in addition to the production parameters and the product properties data comprise also further variables or data. In the present sense, a machine may be any kind of apparatus and in particular a lab apparatus for any or all steps of polymeric material production. In other words, the formulation portions specify what raw material is used and to what proportion for producing the polymeric product. This also relates to material such as blowing agents which may be used in the production of the polymeric product but substantially are not part of the polymeric product. The processing parameters may comprise settings for the machine or group of machines that processes the raw material in order to obtain the polymeric product. The processing parameters may also comprise constant characteristics of the machine or group of machines. These may include geometrical dimensions, maximum power etc. of the machine or group of machines.

Preferably, the production parameters comprise ambient parameters describing the environment during the production of the polymeric product. Such ambient parameters may be descriptive of the temperature, pressure, humidity, sunshine intensity and/or of other physical parameters of the environment.

In addition, the production parameters may also comprise formulation description data for describing dynamic behavior of raw material portions. For example, if the polymeric production is a foam production and the foam is created by the reaction of the raw materials according to the raw material portions, then the formulation description data may describe properties relating to that reaction. Thus, the formulation description data may specify starting time, rising time and/or setting time.

The product properties data may in principle relate to any physical or chemical property of the polymeric product. In particular, the product properties data may comprise density, compression characteristics, restoring characteristics, compression hardness, thermal conductivity, compressive strength, torsional stiffness and/or flame resistance.

Before the first pass of the prediction model, the prediction model may be empty in the sense that only a trivial or zero-order approximation relationship is provided. Alternatively, parameters of the prediction model are randomly set or populated. With successive iterations of the method, the prediction model is incrementally built up.

In the method according to the invention, user input is provided comprising user product targets specifying only a part of the data entry properties.

In other words, the user input provides the above-mentioned user product targets, which may either describe at least some desired product properties data of the polymeric product and - as an alternative or in addition - describe at least some formulation portions data and processing parameters data. Thus, the user may specify product properties data and look for production parameters in order to produce a polymeric product with this product properties data. The user may also specify production parameters and want to determine the resulting product properties data. Still further, the user may specify some production parameters and some product properties data and obtain as output additional production parameters as well as additional product properties data for the corresponding polymeric product thereby defined.

The user product targets may also refer to value brackets instead of specific individual values. The user product targets may also be indirectly given, e.g. by reference to known product properties data of a known polymeric product.

In the method according to the invention, a new data entry is generated by the computer system for realizing the user product targets by applying the user product targets to the prediction model. The generation of the new data entry is at least partially based on applying the user product targets to the prediction model, i.e. by providing the user product targets as input to the prediction model. The above means that the resultant new data entry, also comprising data entry properties which in turn comprise product properties data and production parameters, is to be such that the user product targets are to be at least approximated by a polymeric product produced in accordance with data entry properties of the new data entry according to the prediction model. The degree to which those user product targets are actually realized may be different for different cases.

Applying the user product targets to the prediction model may also comprise the prediction model determining and in particular calculating derived or intermediate values based on the user product targets. These derived or intermediate values may then be used to calculate the new data entry according to the prediction model.

In the method according to the invention, for the new data entry the specified data entry properties are determined. In the parlance of reinforcement learning, any new data entry with the data entry properties constitutes a state with associated values. This determination presents a verification of the projection of the prediction model and may be done in different ways, which shall be discussed in more detail below. In any case, this determination occurs substantially independent from the prediction model, since the goal is to verify and check the prediction model.

Further in the method according to the invention, a reward metric is determined by the computer system based on the determined data entry properties. Here, reward metric denotes a variable indicative of the extent to which the determined data entry corresponds to new data that is to be encouraged in some sense, i.e. which presents a step in the right direction. How such a right direction is defined is, in principle, arbitrary and several possibilities exist. Properties correspond to the user product targets and to which extent the prediction of the prediction model has been verified by the determination of the data entry properties. In the context of reinforcement, this is the reward, which may be positive or negative depending on the success of the prediction model.

In the method according to the invention, the prediction model is updated based upon the reward metric by the computer system. In other words, in the case of a high reward it is fed back to the prediction model that the generated new data entry was "right" as quantified by the reward, it has at least predicted in the correct direction. In the case of a low reward of compliance, the information of a generated new data entry in a false direction is fed back. This feedback results in a corresponding change and further refinement in the prediction model.

The computer system may comprise one or more computers of any kind which may be interconnected by any kind of network. The computer system may also be fully or partially implemented by a cloud computing environment.

In the method according to the invention, the new data entry is entered into a formulation database of data entries with data entry properties.

In the parlance of reinforcement learning, the generation of the new data entry is called an action.

In the method according to the invention, the new data entry is generated by selecting a base data entry from the formulation database and modifying at least one data entry property of the base data entry based on applying the user product targets to the prediction model. Thus, the new data entry - i.e. the new state - is a modification of an existing data entry, namely the selected data entry. Preferably, the base data entry from the formulation database is selected based on a similarity of the data entry properties of the base data entry with the data entry properties specified by the user product targets.

Preferably, modifying the at least one data entry property comprises changing the at least one data entry property by a modification value. This may be addition, subtraction, multiplication or division of the corresponding original value of the data entry property by the modification value.

In principle, the above modification may be done in a substantially deterministic manner. In a further preferred embodiment of the method, generating the new data entry comprises a pseudo-random or evolutionary determination. Such pseudo-randomness is particularly suitable for reinforcement learning. Here it is further preferred that selecting the base data entry and/or determining the modification value and/or choosing the at least one data entry property for modification comprises a pseudo-random or evolutionary determination.

In principle, the modification value may have an arbitrary value and the base entry may be arbitrarily selected. However, there may be limitations and boundaries on what states are permitted and - accordingly - what kind of actions are possible to obtain a new state. Any such rules, limitations or boundaries also form part of the policy in the parlance of reinforcement learning. According to a preferred embodiment of the method, modification boundary parameters are provided, preferably by a user, that limit selection of the base entry. Thus, it may be that the base entry is restricted to a subset of the data entries of the formulation database. Alternatively or in addition, the modification boundary parameters limit which at least one data entry property can be chosen for modification. Thus, not all data entry properties may be available for modification. Such a limitation is particularly useful when it is known that the respective property is irrelevant for the matter at hand. Alternatively or in addition, the modification boundary parameters provide a numerical limit for the modification value. Thus, the modification may be restricted to small degrees if it is known that there exists great numerical sensitivity. In particular, they may provide a numerical limit for the modification value depending on the at least one data entry property chosen for modification. Thus, the potentially different sensitivity of different data entry properties may be considered.

In the method according to the invention the reward metric is a proximity metric based on compliance between the determined data entry properties and the user product targets and , the prediction model is updated such that for a proximity metric indicating a higher compliance, in particular with the criterion underlying the reward metric, the modification of the modified at least one data entry property is reinforced and that for a proximity metric indicating a lower compliance, the modification of the modified at least one data property is weakened.

In a further preferred embodiment of the method, the user product targets specify product properties data. Thus, production parameters for producing a polymeric product with the user product targets is sought. Here it is preferred, that the data entry is modified by modifying production parameters to generate the new data entry.

According to a preferred embodiment of the method, the user product targets specify production parameters. Then, the resulting product properties data of a corresponding polymeric product is sought. Preferably then the data entry is modified by modifying product properties data to generate the new data entry.

One preferred way of determining the specified data entry properties for the new data entry is by way of an experiment. Thus, according to a further preferred embodiment of the invention, for the new data entry the specified data entry properties are determined by producing a polymeric product according to the production parameters of the new data entry and by measuring at least some of the specified data entry properties. It is further preferred that the production parameters of the new data entry are applied to provide raw materials according to the formulation portions to a machine for polymeric production. It may in particular be that the machine process properties comprise user-settable machine process settings and that the production parameters of the new data entry are applied to select machine process settings in a machine for polymeric production, such that a polymeric product is produced by the machine from the raw materials. Thus, in this preferred embodiment the method culminates in the production of an actual polymeric product, which may then form the basis for reliable feedback to the prediction model.

An alternative for such measurement on a polymeric product are calculations based on computational model, which in turn may be based on known formulas. Thus in a preferred embodiment of the method, for the new data entry the specified data entry properties are determined by applying a computational model to at least some of the data entry properties of the new data entry. It is preferred that the computational model is a physical model. In addition or alternatively, it could also be a chemical model.

In general for reinforcement learning, a single iteration is insufficient for arriving at a sufficiently precise prediction model. Therefore in a further preferred embodiment of the method, a cycle of generating the new data entry, determining the specified data entry properties for the new data entry, determining the reward metric and updating the prediction model is repeated until a new data entry is generated for which the reward metric exceeds a predetermined limit. For example, when the reward metric is a proximity metric, the cycle is repeated until the prediction is sufficiently precise.

The predetermined limit may be comprised by the user input. In this way, the user can at least indirectly influence the precision to which the model is to be developed.

In the method according to the invention, the user input comprises a user selection of raw materials from a list of raw materials predefined in the computer system, thereby defining combinations of the raw materials for a polymeric formulation, and that for the new data entry the formulation portions specify raw material portions from the user selection of raw materials. This may be useful when the use of some raw materials is not possible or expeditious for economical, logistical or other reasons or the use of some other raw materials is especially preferred.

In principle, any raw material used for polymeric production may be specified by the formulation portions, even if it is not present in the finished polymeric product. According to a further preferred embodiment of the method, the user-selected raw materials comprise an isocyanate and a polyol. The user-selected raw materials may also comprise a plurality of isocyanates and/or a plurality of polyols. The user-selected raw materials may also comprise a blowing agent. Preferably, the user-selected raw materials further comprise a chain extender, a cross linker, a catalyst for accelerating the formation of polyurethane, a flame retardant, a pigment, at least one filler and/or a surfactant.

The machine process properties may in principle relate to any setting applied to a device, machine or plant involved in the production of a polymeric product or any constant characteristic describing such a device, machine or plant. In particular, the user-settable machine process settings may comprise machine process settings for variably adjusting the operation of a machine in the production of a polymeric product. According to a further preferred embodiment of the method, the machine process properties, preferably the user-settable machine process settings, comprise a component temperature, a mixing time, a mixing proportion, a tool temperature, a discharge capacity and/or a line speed. All the described machine process properties are in particular for the production of the polymeric product.

The formulation database may either be a single database or may be a system of several databases, with different kinds of information stored in each of the several databases.

It is preferred that the formulation database is at least partially based on experimental results. Thus in a preferred embodiment, at least some of the data entries of the formulation database are based on polymeric products produced prior to the user input, such that the formulation portions data specifies raw material portions used for the production of the respective polymeric product and the processing parameters data specifies the machine process properties during the production of that polymeric product.

Preferred embodiments, features and advantages of the computer system according to the invention correspond to those of the method according to the invention and vice versa.

Further advantageous and preferred features are discussed in the following description with respect to the Figures. In the following it is shown in
- Fig. 1: a schematic view of an embodiment of the method according to the invention and
- Fig. 2: a schematic view of a computer system for performing an embodiment of the method according to the invention.

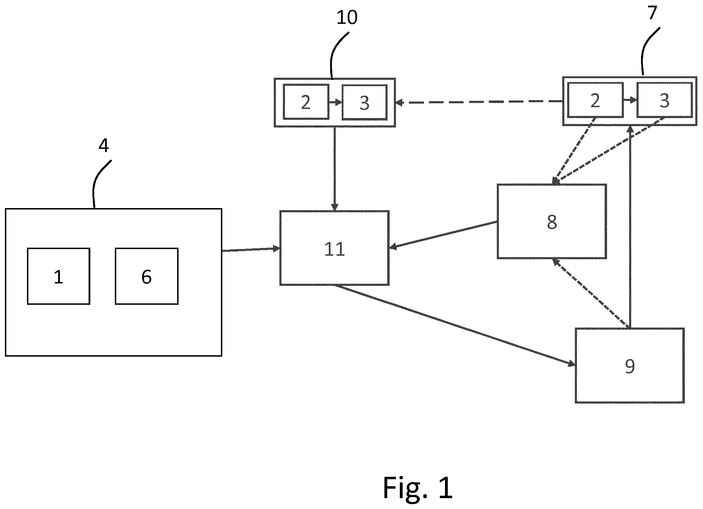

The exemplary method illustrated in Fig. 1 concerns a polyurethane product as an exemplary polymeric product. At the beginning stage of the execution of the method, the prediction model 1 - which forms part of the policy 4 - may consist only of a rudimentary, first order calculation model which determines particular production parameters 2 as output based on desired product properties data 3. Such product properties data 3 in the present example comprises density. The production parameters 2 comprise in the present example raw material portions, which relate to proportional water content and proportional content of an isocyanate. The production parameters 2 also comprise in the present example processing parameters which relate to the temperature of the isocyanate during production.

In the present case, it may be desired to determine the production parameters for obtaining a polyurethane product for which a density of 50 kg/m^3 is desired, which presents user product target as part of user input.

Beside the above-mentioned prediction model 1, the policy 4 also comprises modification boundary parameters 6. In the present example, these specify that proportional water content may be in the bracket between 0 % and 2 % and have a modification step of 0.1 %, that proportional isocyanate content may have a modification step of 10 parts and that the temperature of the isocyanate during production may have a modification step of 2°C and is in the bracket between 0 and 100 parts and that the temperature of the isocyanate during production may be between 20°C and 50°C.

Then a new data entry 7, where each data entry comprises production parameters 2 and product properties data 3, is generated by the computer system 5 and more precisely by an agent 11, which agent 11 is also a software running on the computer system 5. The generation of the new data entry 7 is done by means of an action 9 and according to the policy 4, i.e. in particular based on the prediction model 1 and the modification boundary parameters 6. In the present example, the generation of the new data entry 7 occurs by modifying a default data entry 10 which is either pre-determined or given randomly. In particular, the proportional water content is increased by 0.1 % proceeding from the value of the production parameters 2 of the default data entry 10.

The generated new data entry 7 comprises generated production parameters 2 such that based on the generated production parameters 2, a corresponding polyurethane product is produced and the specified data entry properties - i.e. in the present example the density - as well as other product properties 3 are determined. In the present example, the measurement of the produced polyurethane product results in a density of 40 kg/m^3.

A reward metric 8 - which in the present case is a proximity metric - is determined by comparing this measurement to the user product target of 50 kg/m^3 and based on the closeness to the target, a higher or lower reward metric 8 generated.

This reward metric 8 is fed back to the policy 4 and in particular the prediction model 1, in the present example by means of the agent 11, to reinforce or weaken the modification that was underlying the generation of the new data entry 7.

Then, the cycle is repeated, and the next new data entry 7 is generated based on modification of the previously generated new data entry 7 until the reward metric 8 is so high that the target defined by the reward metric 8 is achieved.

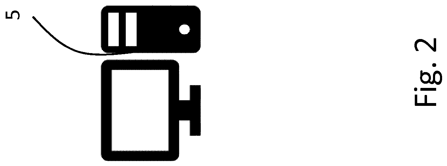

In Fig. 2 an exemplary computer system 5 in which the above steps can be implemented is shown.

## Claims

1. Computer implemented method for improving prediction relating to the production of a polymeric product, wherein a prediction model (1) is provided for describing a functional relationship between production parameters (2), which production parameters (2) comprise formulation portions data specifying raw material portions used for the production of a respective polymeric product and comprise processing parameters data specifying machine process properties during the production of that polymeric product, and product properties data (3) associated with that polymeric product on a computer system (5), which production parameters (2) and product properties data (3) form data entry properties for a respective polymeric product, wherein user input is provided comprising user product targets specifying only a part of the data entry properties, wherein a new data entry (7) with data entry properties is generated by the computer system (5) for realizing the user product targets and entered into a formulation database of data entries with data entry properties and wherein for the new data entry (7) the specified data entry properties are determined, **characterized in that** the new data entry (7) is generated by selecting a base data entry from the formulation database and modifying at least one data entry property of the base data entry based on applying the user product targets to the prediction model (1), that a reward metric (8) is determined by the computer system (5) based on the determined data entry properties, that based upon the reward metric (8) the prediction model (1) is updated by the computer system (5), that the user input comprises a user selection of raw materials from a list of raw materials predefined in the computer system (5), thereby defining combinations of the raw materials for a polymeric formulation, that for the new data entry (7) the formulation portions data specifies raw material portions from the user selection of raw materials, that the reward metric (8) is a proximity metric based on compliance between the determined data entry properties and the user product targets and that the prediction model (1) is updated such that for a proximity metric indicating higher compliance, the modification of the modified at least one data entry property is reinforced and that for a proximity metric indicating a lower compliance, the modification of the at least one data property is weakened.

2. Method according to claim 1, **characterized in that** modifying the at least one data entry property comprises changing the at least one data entry property by a modification value.

3. Method according to claim 2, **characterized in that**, generating the new data entry (7) comprises pseudo-random determination, preferably, that selecting the base data entry and/or determining the modification value and/or choosing the at least one data entry property for modification comprises a pseudo-random determination.

4. Method according to claim 2 or 3, **characterized in that**, modification boundary parameters (6) are provided, preferably by a user, that limit selection of the base entry and/or limit which at least one data entry property can be chosen for modification and/or provide a numerical limit for the modification value, in particular, a numerical limit for the modification value depending on the at least one data entry property chosen for modification.

5. Method according to one of claims 1 to 4, **characterized in that**, the user product targets specify product properties data (3), preferably, that the data entry is modified by modifying production parameters (2) to generate the new data entry (7).

6. Method according to one of claims 1 to 5, **characterized in that**, the user product targets specify production parameters (2), preferably, that the data entry (7) is modified by modifying product properties data (3) to generate the new data entry (7).

7. Method according to one of claims 1 to 6, **characterized in that**, for the new data entry (7) the specified data entry properties are determined by producing a polymeric product according to the production parameters (2) of the new data entry (7) and by measuring at least some of the specified data entry properties, preferably, that the production parameters (2) of the new data entry (7) are applied to provide raw materials according to the formulation portions to a machine for polymeric production, preferably, that the machine process properties comprise user-settable machine process settings and that the production parameters of the new data entry (7) are applied to select machine process settings in a machine for polymeric production, such that a polymeric is produced by the machine from the raw materials.

8. Method according to one of claims 1 to 7, **characterized in that**, for the new data entry (7) the specified data entry properties are determined by applying a computational, preferably physical and/or chemical, model to at least some of the data entry properties of the new data entry (7).

9. Method according to one of claims 1 to 8, **characterized in that**, a cycle of generating the new data entry (7), determining the specified data entry properties for the new data entry (7), determining the reward metric (8) and updating the prediction model (1) is repeated until a new data entry (7) is generated for which the reward metric (8) exceeds a predetermined limit.

10. Method according to one of claims 1 to 9, **characterized in that** the user selection of raw materials comprises an isocyanate and a polyol, in particular also a blowing agent, preferably, further comprises a chain extender, a cross linker, a catalyst for accelerating the formation of polyurethane, a flame retardant, a pigment, water, at least one filler and/or a surfactant.

11. Method according to one of claims 1 to 10, **characterized in that** the machine process properties, preferably the user-settable machine process settings, comprise a component temperature, a mixing time, a mixing proportion, a tool temperature, a discharge capacity and/or a line speed.

12. Method according to one of claims 1 to 11, **characterized in that**, at least some of the data entries of the formulation database are based on polymeric products produced prior to the user input, such that the formulation portions data specifies raw material portions used for the production of the respective polymeric product and the processing parameters data specifies the machine process properties during the production of that polymeric product, preferably, that the product properties data (3) comprises measurement data measured from the respective polymeric product.

## Patentansprüche

1. Computerimplementiertes Verfahren zur Verbesserung der Vorhersage bezüglich der Herstellung eines Polymerprodukts, wobei ein Vorhersagemodell (1) bereitgestellt wird, um eine funktionelle Beziehung zwischen Produktionsparametern (2) zu beschreiben, wobei die Produktionsparameter (2) Formulierungsanteilsdaten, die die für die Herstellung eines jeweiligen Polymerprodukts verwendeten Rohmaterialanteile spezifizieren, und Verarbeitungsparameterdaten, die die Maschinenprozesseigenschaften während der Herstellung dieses Polymerprodukts spezifizieren, und Produkteigenschaftsdaten (3), die mit diesem Polymerprodukt in einem Computersystem (5) verbunden sind, umfassen, wobei die Produktionsparameter (2) und Produkteigenschaftsdaten (3) Dateneingabeeigenschaften für ein jeweiliges Polymerprodukt bilden, wobei Benutzereingaben bereitgestellt werden, die Benutzerproduktziele umfassen, die nur einen Teil der Dateneingabeeigenschaften spezifizieren, wobei eine neue Dateneingabe (7) mit Dateneingabeeigenschaften durch das Computersystem (5) zur Realisierung der Benutzerproduktziele erzeugt und in eine Formulierungsdatenbank von Dateneingaben mit Dateneingabeeigenschaften eingegeben wird und wobei für die neue Dateneingabe (7) die spezifizierten Dateneingabeeigenschaften bestimmt werden, **dadurch gekennzeichnet, dass** die neue Dateneingabe (7) erzeugt wird, indem eine Basisdateneingabe aus der Formulierungsdatenbank ausgewählt wird und mindestens eine Dateneingabeeigenschaft der Basisdateneingabe basierend auf der Anwendung der Benutzerproduktziele auf das Vorhersagemodell (1) modifiziert wird, dass eine Belohnungsmetrik (8) durch das Computersystem (5) basierend auf den bestimmten Dateneingabeeigenschaften bestimmt wird, dass basierend auf der Belohnungsmetrik (8) das Vorhersagemodell (1) durch das Computersystem (5) aktualisiert wird, dass die Benutzereingabe eine Benutzerauswahl von Rohstoffen aus einer Liste von Rohstoffen umfasst, die in dem Computersystem (5) vordefiniert ist, wodurch Kombinationen der Rohstoffe für eine Polymerformulierung definiert werden, dass für die neue Dateneingabe (7) die Formulierungsanteilsdaten Rohstoffanteile aus der Benutzerauswahl von Rohstoffen angeben, dass die Belohnungsmetrik (8) eine Näherungsmetrik ist, die auf der Übereinstimmung zwischen den bestimmten Dateneingabeeigenschaften und den Benutzerproduktzielen basiert, und dass das Vorhersagemodell (1) so aktualisiert wird, dass für eine Näherungsmetrik, die eine höhere Übereinstimmung anzeigt, die Modifikation der modifizierten mindestens einen Dateneingabeeigenschaft verstärkt wird, und dass für eine Näherungsmetrik, die eine geringere Übereinstimmung anzeigt, die Modifikation der mindestens einen Dateneigenschaft abgeschwächt wird.

2. Verfahren nach Anspruch 1, **dadurch gekennzeichnet, dass** das Modifizieren der mindestens einen Dateneingabeeigenschaft das Ändern der mindestens einen Dateneingabeeigenschaft um einen Modifikationswert umfasst.

3. Verfahren nach Anspruch 2, **dadurch gekennzeichnet, dass** das Erzeugen der neuen Dateneingabe (7) eine Pseudozufallsermittlung umfasst, vorzugsweise, dass die Auswahl der Basisdateneingabe und/oder das Bestimmen des Modifikationswerts und/oder die Auswahl der mindestens einen Dateneingabeeigenschaft zum Modifizieren eine Pseudozufallsermittlung umfasst.

4. Verfahren nach Anspruch 2 oder 3, **dadurch gekennzeichnet, dass**, vorzugsweise durch einen Benutzer, Modifikationsgrenzparameter (6) bereitgestellt werden, die die Auswahl der Basiseingabe begrenzen und/oder begrenzen, welche mindestens eine Dateneingabeeigenschaft zum Modifizieren gewählt werden kann und/oder einen numerischen Grenzwert für den Modifikationswert bereitstellen, insbesondere einen numerischen Grenzwert für den Modifikationswert in Abhängigkeit von der mindestens einen zum Modifizieren gewählten Dateneingabeeigenschaft.

5. Verfahren nach einem der Ansprüche 1 bis 4, **dadurch gekennzeichnet, dass** die Benutzerproduktziele Produkteigenschaftensdaten (3) spezifizieren, vorzugsweise, dass die Dateneingabe durch Modifizieren der Produktionsparameter (2) modifiziert wird, um die neue Dateneingabe (7) zu erzeugen.

6. Verfahren nach einem der Ansprüche 1 bis 5, **dadurch gekennzeichnet, dass** die Benutzerproduktziele Produktionsparameter (2) spezifizieren, vorzugsweise, dass die Dateneingabe (7) durch Modifizieren von Produkteigenschaftsdaten (3) modifiziert wird, um die neue Dateneingabe (7) zu erzeugen.

7. Verfahren nach einem der Ansprüche 1 bis 6, **dadurch gekennzeichnet, dass** für die neue Dateneingabe (7) die spezifizierten Dateneingabeeigenschaften durch Herstellen eines Polymerprodukts gemäß den Produktionsparametern (2) der neuen Dateneingabe (7) und durch Messen mindestens einiger der spezifizierten Dateneingabeeigenschaften bestimmt werden, vorzugsweise, dass die Produktionsparameter (2) der neuen Dateneingabe (7) angewendet werden, um Rohstoffe gemäß den Formulierungsanteilen an einer Maschine zur Polymerherstellung bereitzustellen, vorzugsweise, dass die Maschinenprozesseigenschaften benutzerdefinierbare Maschinenprozesseinstellungen umfassen und dass die Produktionsparameter der neuen Dateneingabe (7) angewendet werden, um Maschinenprozesseinstellungen in einer Maschine zur Polymerherstellung auszuwählen.

8. Verfahren nach einem der Ansprüche 1 bis 7, **dadurch gekennzeichnet, dass** für die neue Dateneingabe (7) die spezifizierten Dateneingabeeigenschaften durch Anwenden eines rechnerischen, vorzugsweise physikalischen und/oder chemischen Modells auf zumindest einige der Dateneingabeeigenschaften der neuen Dateneingabe (7) bestimmt werden.

9. Verfahren nach einem der Ansprüche 1 bis 8, **dadurch gekennzeichnet, dass** ein Zyklus aus Erzeugen der neuen Dateneingabe (7), Bestimmen der spezifizierten Dateneingabeeigenschaften für die neue Dateneingabe (7), Bestimmen der Belohnungsmetrik (8) und Aktualisieren des Vorhersagemodells (1) so lange wiederholt wird, bis eine neue Dateneingabe (7) erzeugt wird, für die die Belohnungsmetrik (8) einen vorgegebenen Grenzwert überschreitet.

10. Verfahren nach einem der Ansprüche 1 bis 9, **dadurch gekennzeichnet, dass** die Benutzerauswahl an Rohstoffen ein Isocyanat und ein Polyol, insbesondere auch ein Treibmittel, vorzugsweise weiter einen Kettenverlängerer, einen Vernetzer, einen Katalysator zum Beschleunigen der Polyurethanbildung, ein Flammschutzmittel, ein Pigment, Wasser, mindestens einen Füllstoff und/oder ein Tensid umfasst.

11. Verfahren nach einem der Ansprüche 1 bis 10, **dadurch gekennzeichnet, dass** die Maschinenprozesseigenschaften, vorzugsweise die vom Benutzer einstellbaren Maschinenprozesseigenschaften, eine Komponententemperatur, eine Mischzeit, einen Mischanteil, eine Werkzeugtemperatur, eine Austragsleistung und/oder eine Liniengeschwindigkeit umfassen.

12. Verfahren nach einem der Ansprüche 1 bis 11, **dadurch gekennzeichnet, dass** zumindest ein Teil der Dateneingaben der Formulierungsdatenbank auf vor der Benutzereingabe hergestellten Polymerprodukten basiert, so dass die Formulierungsanteilsdaten die für die Herstellung des jeweiligen Polymerproduktes verwendeten Rohstoffanteile und die Verarbeitungsparameterdaten die Maschinenprozesseigenschaften bei der Herstellung dieses Polymerproduktes spezifizieren, vorzugsweise, dass die Produkteigenschaftsdaten (3) an dem jeweiligen Polymerprodukt gemessene Messdaten umfassen.

## Revendications

1. Procédé mis en œuvre par ordinateur pour améliorer une prédiction relative à la production d'un produit polymère, dans lequel un modèle de prédiction (1) est fourni pour décrire une relation fonctionnelle entre des paramètres de production (2), lesquels paramètres de production (2) comprennent des données de portions de formulation spécifiant des portions de matières premières utilisées pour la production d'un produit polymère respectif et comprennent des données de paramètres de traitement spécifiant des propriétés de traitement de machine pendant la production de ce produit polymère, et des données de propriétés de produit (3) associées à ce produit polymère, sur un système informatique (5), lesquels paramètres de production (2) et données de propriétés de produit (3) forment des propriétés d'entrée de données pour un produit polymère respectif, dans lequel une entrée utilisateur comprenant des objectifs de produit d'utilisateur spécifiant uniquement une partie des propriétés d'entrée de données est fournie, dans lequel une nouvelle entrée de données (7) avec des propriétés d'entrée de données est générée par le système informatique (5) pour réaliser les objectifs de produit d'utilisateur et entrée dans une base de données de formulation d'entrées de données avec des propriétés d'entrée de données, et dans lequel, pour la nouvelle entrée de données (7), les propriétés d'entrée de données spécifiées sont déterminées, **caractérisé en ce que** la nouvelle entrée de données (7) est générée par sélection d'une entrée de données de base à partir de la base de données de formulation et modification d'au moins une propriété d'entrée de données de l'entrée de données de base sur la base de l'application des objectifs de produit d'utilisateur au modèle de prédiction (1), **en ce qu'**une métrique de récompense (8) est déterminée par le système informatique (5) sur la base des propriétés d'entrée de données déterminées, **en ce que**, sur la base de la métrique de récompense (8), le modèle de prédiction (1) est actualisé par le système informatique (5), **en ce que** l'entrée utilisateur comprend une sélection par l'utilisateur de matières premières à partir d'une liste de matières premières prédéfinies dans le système informatique (5), définissant ainsi des combinaisons des matières premières pour une formulation polymère, **en ce que**, pour la nouvelle entrée de données (7), les données de portions de formulation spécifient des portions de matières premières à partir de la sélection par l'utilisateur de matières premières, **en ce que** la métrique de récompense (8) est une métrique de proximité basée sur une conformité entre les propriétés d'entrée de données déterminées et les objectifs de produit d'utilisateur, et **en ce que** le modèle de prédiction (1) est actualisé de telle sorte que, pour une métrique de proximité indiquant une plus grande conformité, la modification de l'au moins une propriété d'entrée de données modifiée est renforcée, et **en ce que**, pour une métrique de proximité indiquant une plus faible conformité, la modification de l'au moins une propriété de données est affaiblie.

2. Procédé selon la revendication 1, **caractérisé en ce que** la modification de l'au moins une propriété d'entrée de données comprend le changement de l'au moins une propriété d'entrée de données par une valeur de modification.

3. Procédé selon la revendication 2, **caractérisé en ce que** la génération de la nouvelle entrée de données (7) comprend une détermination pseudo-aléatoire, de préférence **en ce que** la sélection de l'entrée de données de base et/ou la détermination de la valeur de modification et/ou le choix de l'au moins une propriété d'entrée de données pour modification comprennent une détermination pseudo-aléatoire.

4. Procédé selon la revendication 2 ou 3, **caractérisé en ce que** des paramètres de limite de modification (6) sont fournis, de préférence par un utilisateur, lesquels limitent la sélection de l'entrée de base et/ou limitent l'au moins une propriété d'entrée de données qui peut être choisie pour modification et/ou fournissent une limite numérique pour la valeur de modification, en particulier une limite numérique pour la valeur de modification dépendant de l'au moins une propriété d'entrée de données choisie pour modification.

5. Procédé selon une des revendications 1 à 4, **caractérisé en ce que** les objectifs de produit d'utilisateur spécifient des données de propriétés de produit (3), de préférence **en ce que** l'entrée de données est modifiée par modification de paramètres de production (2) pour générer la nouvelle entrée de données (7).

6. Procédé selon une des revendications 1 à 5, **caractérisé en ce que** les objectifs de produit d'utilisateur spécifient des paramètres de production (2), de préférence **en ce que** l'entrée de données (7) est modifiée par modification de données de propriétés de produit (3) pour générer la nouvelle entrée de données (7).

7. Procédé selon une des revendications 1 à 6, **caractérisé en ce que**, pour la nouvelle entrée de données (7), les propriétés d'entrée de données spécifiées sont déterminées par production d'un produit polymère en fonction des paramètres de production (2) de la nouvelle entrée de données (7) et par mesure d'au moins certaines des propriétés d'entrée de données spécifiées, de préférence **en ce que** les paramètres de production (2) de la nouvelle entrée de données (7) sont appliqués pour fournir des matières premières en fonction des portions de formulation à une machine pour la production d'un polymère, de préférence **en ce que** les propriétés de traitement de machine comprennent des consignes de traitement de machine réglables par l'utilisateur et **en ce que** les paramètres de production de la nouvelle entrée de données (7) sont appliqués pour sélectionner des consignes de traitement de machine dans une machine pour la production d'un polymère, de telle sorte qu'un polymère est produit par la machine à partir des matières premières.

8. Procédé selon une des revendications 1 à 7, **caractérisé en ce que**, pour la nouvelle entrée de données (7), les propriétés d'entrée de données spécifiées sont déterminées par application d'un modèle informatique, de préférence physique et/ou chimique, à au moins certaines des propriétés d'entrée de données de la nouvelle entrée de données (7).

9. Procédé selon une des revendications 1 à 8, **caractérisé en ce qu'**un cycle de génération de la nouvelle entrée de données (7), détermination des propriétés d'entrée de données spécifiées pour la nouvelle entrée de données (7), détermination de la métrique de récompense (8) et actualisation du modèle de prédiction (1) est répété jusqu'à ce que soit générée une nouvelle entrée de données (7) pour laquelle la métrique de récompense (8) dépasse une limite prédéterminée.

10. Procédé selon une des revendications 1 à 9, **caractérisé en ce que** la sélection par l'utilisateur de matières premières comprend un isocyanate et un polyol, en particulier aussi un agent gonflant, de préférence comprend en outre un agent d'allongement de chaîne, un agent de réticulation, un catalyseur pour accélérer la formation de polyuréthane, un retardateur de flamme, un pigment, de l'eau, au moins une charge et/ou un tensioactif.

11. Procédé selon une des revendications 1 à 10, **caractérisé en ce que** les propriétés de traitement de machine, de préférence les consignes de traitement de machine réglables par l'utilisateur, comprennent une température de constituant, un temps de mélange, une proportion de mélange, une température d'outil, une capacité de débit et/ou une vitesse de ligne.

12. Procédé selon une des revendications 1 à 11, **caractérisé en ce qu'**au moins certaines des entrées de données de la base de données de formulation sont basées sur des produits polymères produits avant l'entrée utilisateur, de telle sorte que les données de portions de formulation spécifient des portions de matières premières utilisées pour la production du produit polymère respectif et les données de paramètres de traitement spécifient les propriétés de traitement de machine pendant la production de ce produit polymère, de préférence **en ce que** les données de propriétés de produit (3) comprennent des données de mesure mesurées à partir du produit polymère respectif.
